# EUROPEAN PATENT APPLICATION

(11) **EP 4 653 697 A1**
(43) Date of publication of application: **26.11.2025**
(21) Application number: 24315244.4
(22) Date of filing: 23.05.2024
(51) Int. Cl.: F03D 17/00, F03D 80/30

(54) **LIGHTNING PROTECTION EQUIPMENT AND ASSOCIATED METHOD**

(71) Applicant: TotalEnergies OneTech, 92400 Courbevoie (FR)
(72) Inventor: DAL ZUFFO, Mary, 92400 Courbevoie (FR); CLEMENT, Guillaume, 92400 Courbevoie (FR)
(74) Representative: Innovincia

(57) **Abstract**

The present invention refers to a lightning protection system (1) for protecting a wind farm (10) comprising a plurality of wind turbines (T1...T16), the lightning protection system (1) comprising:
- at least one protecting equipment (11) comprising:
- a lightning collector (13) linked to the ground (17), for example via an earthing cable (18),
- a femtosecond laser (15) configured to emit a laser beam towards the sky,

- at least one static electricity sensor (21) arranged within the wind farm (10) and configured for measuring an electrostatic potential,
- a control unit (23) connected to the at least one femtosecond laser (15) and to the at least one static electricity sensor (21),
wherein the control unit (23) is configured:
- for comparing the electrostatic potential measured by the at least one static electricity sensor (21) with a predetermined minimum threshold and,
- for activating the at least one femtosecond laser (15) when the measured electrostatic potential is higher than the predetermined minimum threshold.

## Description

### Background of the invention

The field of the present invention refers to the wind farms and in particular the protection of the wind turbines against lightnings.

Lightnings may cause severe damages to wind turbines. To prevent such damages, it is known to use protecting equipments such as lightning rods arranged on top of the wind turbines or lightning pads disposed on the blades of the wind turbines and linked to the ground by electric conductors. Such equipments are configured to forward the energy of the lightning towards the ground.

However, such protecting equipments may not be sufficient to protect efficiently the wind turbines of a wind farm.

It appears therefore necessary to find a solution to improve the protection of the wind turbines of wind farms against lightnings.

The present invention aims therefore at providing such a solution.

### Summary of the invention

The present invention refers to a lightning protection system for protecting a wind farm comprising a plurality of wind turbines, the lightning protection system comprising:
- at least one protecting equipment comprising:
   - a lightning collector linked to the earth, for example via an earthing cable,
   - a femtosecond laser having a laser beam outlet preferably directed towards the sky,
- at least one static electricity sensor arranged within the wind farm and configured for measuring an electrostatic potential,
- a control unit connected to the at least one femtosecond laser and to the at least one static electricity sensor,
wherein the control unit is configured:
- for comparing the electrostatic potential measured by the at least one static electricity sensor with a predetermined minimum threshold and,
- for activating the at least one femtosecond laser when the measured electrostatic potential is higher than the predetermined minimum threshold.

The use of a static electricity sensor enables detecting an approaching thunderstorm and the use of a femtosecond laser in combination with a lightning collector enables providing an improved lightning collector capable of protecting a large area against lightnings.

According to another aspect of the present invention, the lightning protection system further comprises a detection device configured to detect static or flying elements, said detection device comprising at least one sensor among the following list:
- Radar,
- Lidar,
- hyperspectral camera,
and the control unit is configured, prior to the activation of the at least one femtosecond laser, to activate the said detection device and to detect the presence of static or flying elements within a predetermined area around the said at least one femtosecond laser and to assess the probability for the detected elements to cross a laser beam emitted by the said at least one femtosecond laser and to compare the assessed probability with a predetermined maximum threshold and to activate the at least one femtosecond laser when the measured electrostatic potential is higher than the predetermined minimum threshold and the assessed probability is lower than the predetermined maximum threshold.

According to another aspect of the present invention, the at least one lightning collector is arranged on a wind turbine of the wind farm, preferably over a nacelle casing of the wind turbine and wherein the femtosecond laser is configured to emit a laser beam in the upward direction next to the lightning collector.

According to another aspect of the present invention, the wind farm is an offshore wind farm and wherein the system is positioned on a buoy or a bottom-fixed foundation.

According to another aspect of the present invention, the lightning protection system comprises a plurality of protecting equipments arranged respectively on at least a part of the plurality of wind turbines.

According to another aspect of the present invention, the lightning protection system also comprises a plurality of detection devices associated with the respective plurality of protecting equipments.

According to another aspect of the present invention, the lightning protection system comprises a plurality of static electricity sensors distributed at the periphery of the wind farm.

According to another aspect of the present invention, the femtosecond laser, the static electricity sensor, the control unit and possibly the detection device are arranged in a common casing.

According to another aspect of the present invention, the control unit is connected to the femtosecond laser, to the static electricity sensor and possibly to the detection device by wireless communication means.

According to another aspect of the present invention, the femtosecond laser is configured for transmitting pulses having a duration comprised between ten and hundreds of femtoseconds.

According to another aspect of the present invention, the wavelength of the laser beam emitted .by the femtosecond laser is comprised from 850nm to 1200nm, preferably from 995nm to 1005nm.

The present invention also refers to a method for protecting wind turbines of a wind farm wherein the wind farm comprises a lightning protection system comprising:
- at least one protecting equipment comprising:
   - a lightning collector linked to the earth, for example via an earthing cable,
   - a femtosecond laser having a laser beam outlet preferably directed towards the sky,

and at least one static electricity sensor,
the method comprising the following steps:
   - measuring the electrostatic potential with the at least one static electricity sensor,
   - comparing the electrostatic potential measured by the static electricity sensor to a minimum predetermined threshold,
      if the measured electrostatic potential exceeds the minimum predetermined threshold,
   - activating the femtosecond laser to transmit pulses towards the sky.

According to another aspect of the present invention, the lightning protection system further comprises a detection device configured to detect static or flying elements, said detection device comprising at least one sensor among the following list:
- Radar,
- Lidar,
- hyperspectral camera,
and, prior to activating the femtosecond laser, the method further comprises the following steps:
- activating the said detection device,
- detecting the presence of static or flying elements within a predetermined area around the at least one femtosecond laser,
- assessing the probability for the detected elements to cross a laser beam emitted by the said at least one femtosecond laser,
- comparing the assessed probability with a predetermined maximum threshold and,
- activating the at least one femtosecond laser when the measured electrostatic potential is higher than the predetermined minimum threshold and the assessed probability is lower than the predetermined maximum threshold.

According to another aspect of the present invention, the wind farm comprises a plurality of protecting equipments and a plurality of static electricity sensors wherein the plurality of femtosecond lasers is activated when the electrostatic potential measured by one of the static electricity sensors exceeds the minimum predetermined threshold.

### Brief description of the drawings

[Fig.1] is a diagram of an embodiment of a wind farm according to the present invention;
[Fig.2] is a diagram of a wind turbine with a protecting equipment;
[Fig.3a] is a diagram of elements of a lightning protection system according to a first embodiment of the present invention;
[Fig.3b] is a diagram of elements of a lightning protection system according to a second embodiment of the present invention;
[Fig.3c] is a diagram of elements of a lightning protection system according to a third embodiment of the present invention;
[Fig.4] is a diagram of a wind turbine with a lightning collector according to a first embodiment of the present invention;
[Fig.5] is a diagram of a wind turbine with a lightning collector according to a second embodiment of the present invention;
[Fig.6] is a flowchart of the different steps of the method for protecting wind turbines according to an embodiment of the present invention;
[Fig.7] is a flowchart of the different steps of the method for protecting wind turbines according to another embodiment of the present invention.

### Detailed description of the invention

The following achievements are examples. Although, the specification refers to one or several embodiments, it does not imply that each reference refers to the same embodiment or that the features apply only to a single embodiment. Simple features of different embodiments can also be combined to provide other embodiments.

The present invention refers to a lightning protection system 1 for protecting a wind farm 10, for example an offshore wind farm 10, comprising a plurality of wind turbines.

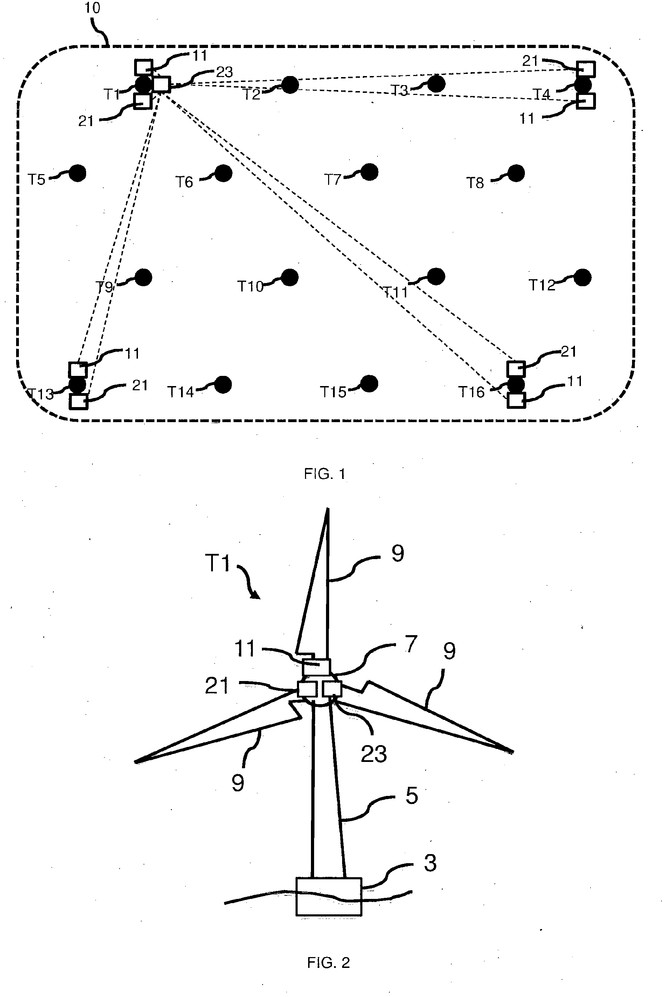

Fig.1 represents an example of an offshore wind farm 10 comprising sixteen wind turbines noted T1, T2...T16.

As represented in Fig.2, a wind turbine, such as the wind turbine T1, comprises a floating structure 3 which can be moored to the ground by moored lines (not represented), a mast 5, a nacelle 7 also called hub and a plurality of blades 9 arranged in a rotatable manner around the hub 7. In the present case, the wind turbine T1 comprises three blades 9.

The lightning protection system 1 can be arranged at least partially on one or several of the wind turbines T1...T16. Alternatively or in combination, the lightning protection system 1 may also be arranged on a buoy or a bottom-fixed foundation of the off-shore wind farm 10. In the case of a terrestrial wind farm, the lightning protection system may be located anywhere.

The lightning protection system 1 comprises at least one protecting equipment 11. In the example of Fig.1, four wind turbines T1, T4, T13 and T16 are equipped with a protecting equipment 11 but different locations or a different number of protecting equipments 11 may also be used. This number and this distribution may be chosen according to the size of the wind farm 10.

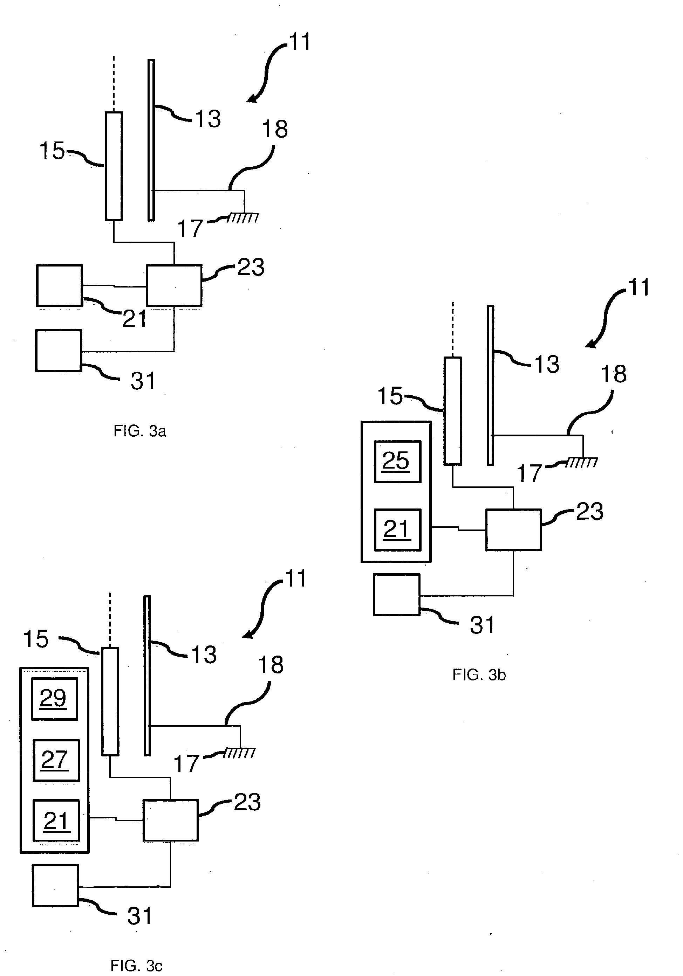

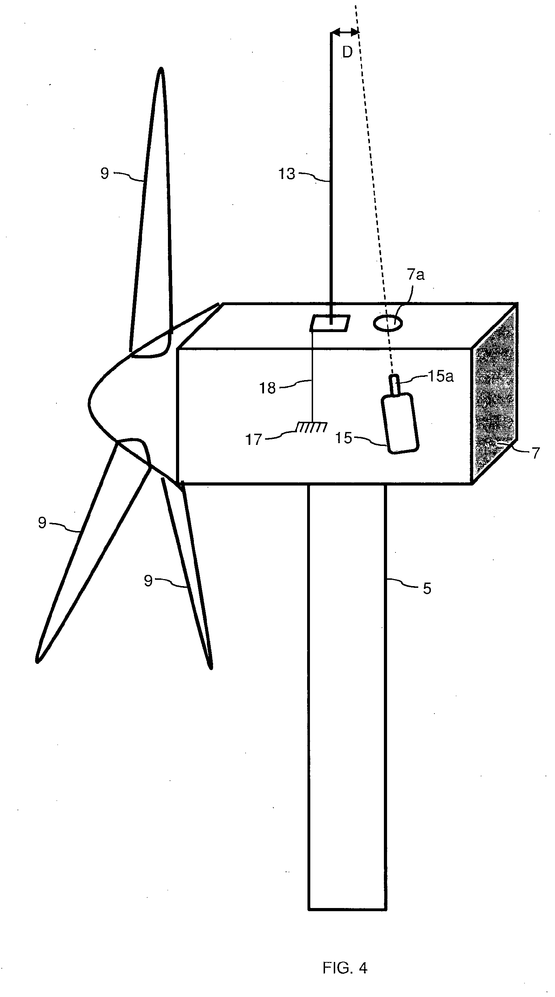

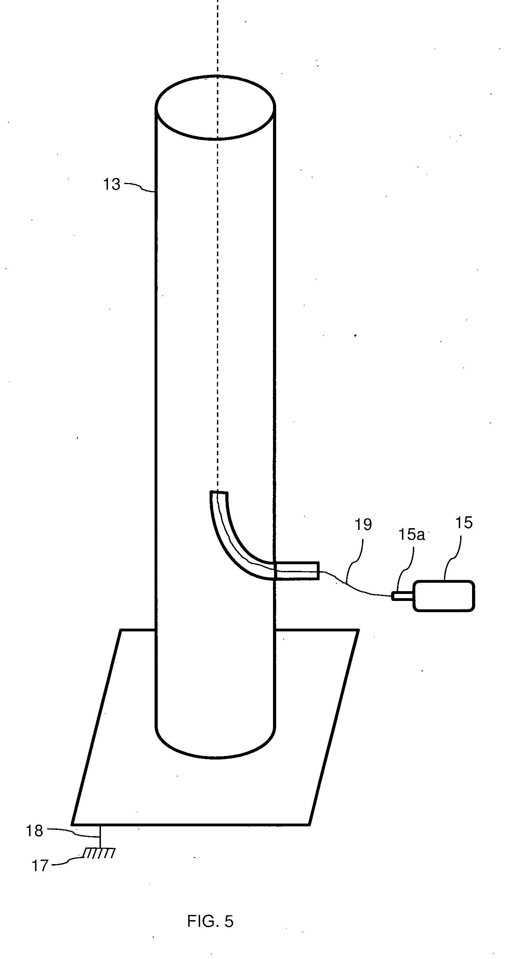

As represented in Fig.3a, a protecting equipment 11 comprises a lightning collector 13 linked to the ground 17. The lightning collector 13 refers for example to a lightning rod (Fig.4) or a hollow tube (Fig.5). The lightning collector 13 may be made of an electrically conductive material such as copper, steel or carbon fiber. The protecting equipment 11 and in particular the lightning collector 13 is preferably arranged above the nacelle 7 when the protecting equipment 11 is located on a wind turbine T1...T16.

The protecting equipment 11 also comprises a femtosecond laser 15. The femtosecond laser 15 is configured to emit a laser beam directed towards the sky, for example within a 10° cone around the vertical direction. The femtosecond laser 15 is configured to emit a laser beam in the upward direction next to the lightning collector 13. The laser beams are represented by dotted lines in the figures. The femtosecond laser 15 is configured for emitting pulses having a duration comprised between ten and hundreds of femtoseconds.

The duration between two pulses may be comprised between one and two microseconds which is approximatively the duration of ionization of the air by the laser beam. Such low frequency enables saving energy.

The wavelength of the laser beam emitted by the femtosecond laser 11 may be comprised from 850nm to 1200nm, preferably from 995nm to 1005nm.

In the embodiment of Fig.4, the lightning collector 13 is a lightning rod, for example a metal rod having a length between 1m and 10m and the femtosecond laser 15 has a laser beam outlet 15a directed towards the sky and is configured to emit a laser beam next to the upper end 13a of the lightning rod 13, for example within a few centimeters of the upper end 13a of the lightning rod 13 (in order to prevent the crossing of the laser beam with the lightning rod 13 in case of wind). The lightning rod 13 is for example arranged on top of the nacelle 7 and is linked to the electrical ground 17 via an earthing cable 18. The femtosecond laser 15 may be arranged within the nacelle 7 and the laser beam may be emitted through a hole 7a arranged on top of the nacelle 7. As the laser beam emitted by the femtosecond laser 15 should not cross the lightning rod 13, the flexibility of the lightning rod 13 under wind pressure has to be taken into account to select the direction of the laser beam outlet 15a and therefore the distance D between the laser beam and the upper end of the lightning rod 13.

In the embodiment of Fig.5, the lightning collector 13 is made by a hollow cylinder linked to the electrical ground 17, for example via an earthing cable 18. The hollow cylinder 13 may also be arranged on top of the nacelle 7. The hollow cylinder 13 may, for example, have a length comprised between 30cm and 2m and a diameter comprised between 5cm and 20cm. The lightning collector 13 may have crenels or sharp shapes at its top end. In this embodiment, the protecting equipment 11 also comprises an optical fiber 19 arranged between the laser beam outlet 15a and the inside of the hollow cylinder 13. The optical fiber 19 comprises a first end linked to the femtosecond laser beam outlet 15a and a second end located inside the hollow cylinder 13. The second end of the optical fiber 19 is directed along the axis of the hollow cylinder 13 and in the upward direction so that the laser beam is transmitted towards the sky, for example at the center of the hollow cylinder 13. The optical fiber 19 is configured to transmit the laser beam emitted by the femtosecond laser 15 towards the sky via the inside of the hollow cylinder 13. The femtosecond laser 15 may also be arranged within the nacelle 7, for example next to the bottom of the hollow cylinder 13. Furthermore, an electrical insulator may be arranged between the optical fiber 19 and the hollow cylinder 13 to prevent damages on the optical fiber 19 in case of a lightning hitting the hollow cylinder 13.

A plurality of protecting equipments 11 may be arranged on the different wind turbines T1...T16 or on buoys or on bottom-fixed foundation elements of the wind farm 10.

The lightning protection system 1 also comprises at least one static electricity sensor 21 arranged within the wind farm 10. A plurality of static electricity sensors 21 may be arranged respectively with the plurality of protecting equipments 11. Alternatively, the static electricity sensor(s) 21 may be arranged on elements such as the wind turbines T1...T16 located at the periphery of the wind farm 10, for example on the wind turbines T1, T4, T13 and T16 in Fig.1. A static electricity sensor 21 is configured for measuring an electrostatic potential. A static electricity sensor 21 may be arranged in a common same casing as the femtosecond laser 15.

The lightning protection system 1 also comprises a control unit 23 connected to the at least one femtosecond laser 15 and to the at least one static electricity sensor 21. In the example of Fig.1, the control unit 23 is located on the wind turbine T1and is connected to the four femtosecond lasers 15 of the four protecting equipments 11 and the four static electricity sensors 21 located on the four wind turbines T1, T4, T13 and T16 (as represented by the dotted lines in Fig.1). The connection may be achieved by wire (in the case of a common casing of the control unit 23 with the femtosecond laser 15 and/or with the static electricity sensor 21) or by wireless transmission means such as a WIFI^{™}, Bluetooth^{®}, Global System for Mobile communications, radio communications or any other wireless communication technologies known by the man skilled in the art.

Other configurations are possible for the control unit 23. For example, the lightning protection system 1 may comprise several control units 15 configured for communicating together or with a central control unit 15. The central control unit may be a master central unit and the other central units may be slave control units.

The control unit 15 may be arranged in the same casing as the femtosecond laser 15 and the static electricity sensor 21 if these devices are located in a common location such as the wind turbine T1 in the example of Fig.1. In such case the connection between the control unit 15 and the other equipments may be a wire connection.

The control unit 23 is configured for receiving the measurements of the static electricity sensor(s) 21 and for comparing the electrostatic potential measured by the static electricity sensor(s) 21 with a predetermined minimum threshold.

The predetermined threshold corresponds to a threshold reached in case of a thunderstorm approaching the area of the wind farm 10.

The predetermined minimum threshold may be chosen to be equal or above 2000V/m to detect any lightnings (safest), equal or above 6000V/m as a tradeoff, or equal or above 10000V/m to save energy.

The control unit 23 is also configured for activating the at least one femtosecond laser 15 when the measured electrostatic potential is higher than the predetermined minimum threshold. The activation of the femtosecond laser 15 refers to the emission of femtosecond pulses.

If the lightning protection system 1 comprises several static electricity sensors 21 and several femtosecond lasers 15, all the femtosecond lasers 11 may be activated when one of the static electricity sensor 21 measures a value higher than the predetermined minimum threshold or femtosecond laser(s) may be associated with a static electricity sensor 21 and are then activated only when the associated static electricity sensor 21 measures a value higher than the predetermined minimum threshold. The activation of the femtosecond lasers 11 may last until the value measured by the associated static electricity sensor 21 or by all the static electricity sensors 21 is lower than the predetermined minimum threshold.

According to an embodiment of the present invention represented in Fig.3b, a static electricity sensor(s) 21 may be combined with a weather radar 25 to determine the probability of a thunderstorm and lightnings with a higher accuracy. The weather radar 25 may also be used to decide of the activation of the static electricity sensor(s) 21 and the different devices of the lightning protection system 1.

According to a further embodiment of the present invention represented in Fig.3c, the static electricity sensor(s) 21 may be combined with a radio-frequency sensor 27 and light sensor 29 in order to determine if a thunderstorm with lightnings is approaching the wind farm 10 area.

Thus, the static electricity sensor(s) 21 with possibly a weather radar 25 or a combination of a radio-frequency sensor 27 and a light sensor 29 are configured for detecting a thunderstorm with lightnings approaching the wind farm 10 area. The control unit 23 may be configured for assessing the probability of occurrence of such thunderstorm, for comparing the assessed probability with a predetermined threshold and if the probability is higher than the predetermined threshold, the control unit 23 may be configured for activating the femtosecond laser(s) 15.

The lightning protection system 1 may also comprise one or several detection device(s) 31 associated with a femtosecond laser 15 and configured to detect static or flying elements within a predetermined area around the detection device 31 (and therefore around the associated femtosecond laser 15), for example within a range of 100m around the detection device 31. Indeed, in order to avoid the emission of a laser beam crossing a flying element such as a drone or a bird (which could lead to their destruction/death), it could be necessary to detect static or flying elements located in the surroundings of the femtosecond laser 15 before emitting a laser beam.

The detection device 31 comprises at least one sensor among the following list:
- a radar (RAdio Detection And Ranging),
- a lidar (Light Detection and Ranging),
- a hyperspectral camera.

The detection device 31 is connected to the control unit 23, for example by wire or by wireless communication means such as the wireless communication means described previously and used to connect the control unit 23 with the other devices of the lightning protection system 1.

When the lightning protection system 1 comprises a detection device 31, the control unit 23 is configured, prior to the activation of the at least one femtosecond laser 15, to activate the detection device 31 in order to detect the presence of static or flying elements within a predetermined area around the associated femtosecond laser 15. Based on the measurements of the detection device 31, the control unit 23 is configured to assess the probability for the detected elements to cross a laser beam emitted by the femtosecond laser 15 associated with the detection device 31 at a predetermined time, for example in the next few seconds. The direction and speed of the flying elements may be taken into account to determine the probability that the detected elements will cross the laser beam at the predetermined time. The control unit 23 is then configured to compare the assessed probability with a predetermined maximum threshold. The predetermined maximum threshold refers for example to a probability of less than 10% or less than 1% depending on the required security level. The control unit 23 is then configured to activate the femtosecond laser 15 when the measured electrostatic potential is higher than the predetermined minimum threshold and the assessed probability is lower than the predetermined maximum threshold. Otherwise, the femtosecond laser 15 is not activated. Several detection devices 31 may be used to cover the whole area of the wind farm 10, for example each femtosecond laser 15 may be associated with a detection device 31. Alternatively, a detection device 31 may be configured to detect static or flying elements within an area comprising a plurality of femtosecond lasers 15 or even the whole wind farm area.

The control unit 23 may be configured to compare repeatedly the measurements from the different devices (static electricity sensor 21 and detection device 31 notably) with the predetermined thresholds (predetermined minimal threshold and predetermined maximal threshold notably) to decide of the activation of the femtosecond laser 15.

The activation of the femtosecond laser 15 produces the emission of a laser beam towards the sky. Such laser beam produces a ionization of the air and creates an artificial "lightning rod" of large dimension, for example higher than 100m (for example a few hundreds of meters) so that the occurrence of a lightning in the region of the laser beam, for example with a radius of a few hundreds of meters around the laser beam, will be directed towards the laser beam and consequently towards the lightning collector 13. As a consequence, the femtosecond laser 15 of the wind Turbine T1 may also protect the neighboring wind turbines T5, T6 and T2 from possible lightnings. The energy of the lightning is then forwarded towards the ground 17 via the earthing cable 18 to be dissipated so that the wind turbines located within a predetermined area around the femtosecond laser 15 are not damaged in case of a lightning hitting this predetermined area. The number of femtosecond lasers 15 may be adapted to cover the whole wind farm 10 area.

The lightning protection system 1 enables therefore to protect the wind turbines T1..T16 of the wind farm 10 against possible lightnings.

The present invention also refers to a method for protecting the wind turbines T1...T16 of a wind farm 10. The wind farm 10 comprises a lightning protection system 1 as described previously.

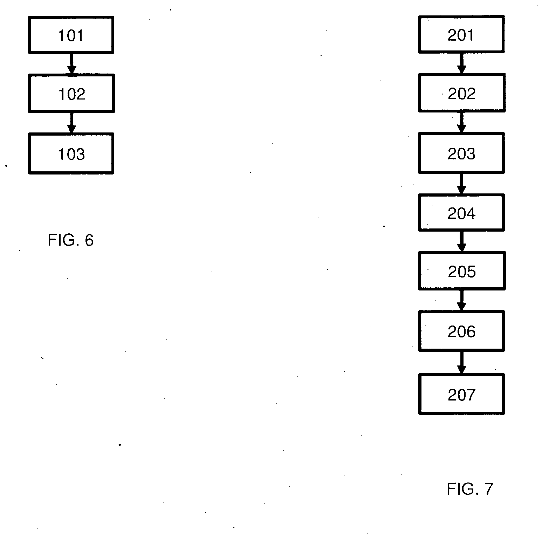

Fig.6 represents a flowchart of the different steps of the method according to a first embodiment of the method.

The first step 101 refers to the measurement of an electrostatic potential with at least one static electricity sensor 21. In the present example of Fig.1, the lightning protection system 1 comprises four static electricity sensors 21 so that measurements are achieved on the four static electricity sensors 21.

The second step 102 refers to the comparison of the electrostatic potential measured by the static electricity sensors 21 to a predetermined minimum threshold.

The third step 103 refers to the activation of the femtosecond lasers 15 to transmit pulses towards the sky if the measured electrostatic potential exceeds the minimum predetermined threshold. The femtosecond lasers 15 may remain activated while the electrostatic potential measured by one of the static electricity sensors 21 is above the predetermined minimum threshold.

Fig.7 represents a flowchart of the different steps of the method according to a second embodiment of the method. In this embodiment, the lightning protection system 1 comprises one or several detection devices 31.

The first 201 and second 202 steps are similar to the first 101 and second 102 steps of the first embodiment presented in Fig.6.

The third step 203 refers to the activation of the detection device 31. This third step 203 may be achieved only when the electrostatic potential measured by the static electricity sensors 21 is above the predetermined minimum threshold. In the example of Fig.1, all the four detection devices 31 associated with the four femtosecond lasers 15 are activated. The detection devices 31 are for example radars, lidars, hyperspectral cameras or a combination of these equipments. The detection range may depend on the type of detection device 31.

The fourth step 204 refers to the detection of the presence of static or flying elements within a predetermined area around the femtosecond lasers 15, for example within a range of 100m.

The fifth step 205 refers to the assessment the probability for the detected elements to cross a laser beam emitted by the associated femtosecond laser 15. This assessment may be determined based on the position of the static elements and the position, the direction and possibly the speed of the flying elements.

The sixth step 206 refers to the comparison of the assessed probability with a predetermined maximum threshold. If the assessed probability is higher than the predetermined maximum threshold, for example higher than 10%, the method returns to step 204. An alarm signal indicating the presence of a possible element crossing the laser beam area may be emitted. If the assessed probability is lower than the predetermined maximal threshold, the method goes to the seventh step 207.

The seventh step 207 refers to the activation of the femtosecond lasers associated with the detection devices 31 for which the assessed probability is lower than the predetermined threshold. In the example of Fig.1, if the assessed probabilities of the different detection devices 31 are all lower than the predetermined maximal threshold, all the four femtosecond lasers 15 are activated to emit laser beams towards the sky. The femtosecond lasers 15 may remain activated while the electrostatic potential measured by one of the static electricity sensors 21 is above the predetermined minimum threshold and the assessed probability is lower than the predetermined threshold.

## Claims

1. Lightning protection system (1) for protecting a wind farm (10) comprising a plurality of wind turbines (T1...T16), the lightning protection system (1) comprising:
- at least one protecting equipment (11) comprising:
- a lightning collector (13) linked to the ground (17), for example via an earthing cable (18),
- a femtosecond laser (15) configured to emit a laser beam towards the sky,
- at least one static electricity sensor (21) arranged within the wind farm (10) and configured for measuring an electrostatic potential,
- a control unit (23) connected to the at least one femtosecond laser (15) and to the at least one static electricity sensor (21),
wherein the control unit (23) is configured:
- for comparing the electrostatic potential measured by the at least one static electricity sensor (21) with a predetermined minimum threshold and,
- for activating the at least one femtosecond laser (15) when the measured electrostatic potential is higher than the predetermined minimum threshold.

2. Lightning protection system (1) according to claim 1, further comprising a detection device (31) configured to detect static or flying elements, said detection device (31) comprising at least one sensor among the following list:
- radar,
- lidar,
- hyperspectral camera,
and wherein the control unit (23) is configured, prior to the activation of the at least one femtosecond laser (15), to activate the said detection device (31) and to detect the presence of static or flying elements within a predetermined area around the said at least one femtosecond laser (15) and to assess the probability for the detected elements to cross a laser beam emitted by the said at least one femtosecond laser (15) and to compare the assessed probability with a predetermined maximum threshold and to activate the at least one femtosecond laser (15) when the measured electrostatic potential is higher than the predetermined minimum threshold and the assessed probability is lower than the predetermined maximum threshold.

3. Lightning protection system (1) according to claim 1 or 2 wherein the at least one lightning collector (13) is arranged on a wind turbine (T1...T16) of the wind farm (10), preferably over a nacelle (7) casing of the wind turbine (T1...T16) and wherein the femtosecond laser (15) is configured to emit a laser beam in the upward direction next to the lightning collector (13).

4. Lightning protection system (1) according to claim 1 or 2 wherein the wind farm (10) is an offshore wind farm (10) and wherein the lightning protection system (1) is positioned on a buoy or a bottom-fixed foundation.

5. Lightning protection system (1) in accordance with one of the previous claims wherein the lightning protection system (1) comprises a plurality of protecting equipments (11) arranged respectively on at least a part of the plurality of wind turbines (T1... T16).

6. Lightning protection system (1) in accordance with claim 5 in combination with claim 2 wherein it also comprises a plurality of detection devices (31) associated with the respective plurality of protecting equipments (11).

7. Lightning protection system (1) in accordance with one of the previous claims wherein the lightning protection system (1) comprises a plurality of static electricity sensors (21) distributed at the periphery of the wind farm (10).

8. Lightning protection system (1) in accordance with one of the previous claims wherein the femtosecond laser (15), the static electricity sensor (21), the control unit (23) and possibly the detection device (31) are arranged in a common casing.

9. Lightning protection system (1) in accordance with one of the previous claims wherein the control unit (23) is connected to the femtosecond laser (15), to the static electricity sensor (21) and possibly to the detection device (31) by wireless communication means.

10. Lightning protection system (1) in accordance with one of the previous claims wherein the femtosecond laser (15) is configured for transmitting pulses having a duration comprised between ten and hundreds of femtoseconds.

11. Lightning protection system (1) in accordance with one of the previous claims wherein the wavelength of the laser beam emitted by the femtosecond laser (15) is comprised from 850nm to 1200nm, preferably from 995nm to 1005nm.

12. Method for protecting wind turbines (T1...T16) of a wind farm (10) wherein the wind farm (10) comprises a lightning protection system (1) comprising:
- at least one protecting equipment (11) comprising:
- a lightning collector (13) linked to the ground (17), for example via an earthing cable (18),
- a femtosecond laser (15) having a laser beam outlet (15a) preferably directed towards the sky,
and at least one static electricity sensor (21),
the method comprising the following steps:
- measuring the electrostatic potential with the at least one static electricity sensor (21),
- comparing the electrostatic potential measured by the static electricity sensor (21) to a minimum predetermined threshold,
if the measured electrostatic potential exceeds the minimum predetermined threshold,
- activating the femtosecond laser (15) to transmit pulses towards the sky.

13. Method in accordance with the previous claim wherein the lightning protection system (1) further comprises a detection device (31) configured to detect static or flying elements, said detection device (31) comprising at least one sensor among the following list:
- radar,
- lidar,
- hyperspectral camera,
and wherein, prior to activating the femtosecond laser (15), the method further comprises the following steps:
- activating the said detection device (31),
- detecting the presence of static or flying elements within a predetermined area around the at least one femtosecond laser (15),
- assessing the probability for the detected elements to cross a laser beam emitted by the said at least one femtosecond laser (15),
- comparing the assessed probability with a predetermined maximum threshold and,
- activating the at least one femtosecond laser (15) when the measured electrostatic potential is higher than the predetermined minimum threshold and the assessed probability is lower than the predetermined maximum threshold.

14. Method in accordance with claim 12 or 13 wherein the wind farm (10) comprises a plurality of protecting equipments (11) and a plurality of static electricity sensors (21) wherein the plurality of femtosecond lasers (15) is activated when the electrostatic potential measured by one of the static electricity sensors (21) exceeds the minimum predetermined threshold.
